# EUROPEAN PATENT SPECIFICATION

(11) **EP 4 031 342 B1**
(45) Date of publication and mention of the grant of the patent: **27.03.2024**
(21) Application number: 20792478.8
(22) Date of filing: 18.09.2020
(51) Int. Cl.: B29B 11/16, B29C 70/38, B25J 15/06

(54) **METHOD AND APPARATUS FOR THE PRODUCTION OF AN ARTICLE MADE OF A COMPOSITE MATERIAL**
VERFAHREN UND VORRICHTUNG ZUR HERSTELLUNG EINES GEGENSTANDES AUS EINEM VERBUNDWERKSTOFF
PROCÉDÉ ET APPAREIL DE PRODUCTION D'ARTICLE CONSTITUÉ D'UN MATÉRIAU COMPOSITE

(30) Priority: 18.09.2019 IT 201900016607
(43) Date of publication of application: 27.07.2022
(73) Proprietor: Mind S.r.L., 40125 Bologna (IT)
(72) Inventor: VARRASI, Francesco, 40125 Bologna (IT); SORICETTI, Michele, 40125 Bologna (IT); FEMIA, Corrado, 40125 Bologna (IT)
(74) Representative: Studio Torta S.p.A.
(86) International application number: PCT/IB2020/058707
(87) International publication number: WO 2021/053597

(56) References cited:
- EP-A1- 1 844 914
- EP-A1- 2 851 173
- EP-A1- 3 348 378
- WO-A1-2019/107579
- DE-A1-102008 032 574
- DE-A1-102013 103 039
- DE-A1-102014 209 904

## Description

### SECTOR OF THE ART

The present invention relates to a method and an apparatus for the production of an article made of a composite material.

In particular, the present invention finds an advantageous, but not exclusive, application in the production of carbon fibre articles to which the following description will make explicit reference without thereby losing generality.

For example, the present invention can find advantageous, but not exclusive, application in the production sector of components for the automotive, aerospace, aeronautical, motorcycle or similar markets.

### PRIOR ART

In highly performing vehicles, or in the construction of vehicles with a high level of safety (such as for example airplanes, ships, spaceships, cars, motorcycles, etc.), it often becomes necessary to ensure high mechanical strength while maintaining the lowest possible weight. For this reason, in recent years the use of composite materials composed generally of carbon and/or glass and/or polymer fibre (e.g. KEVLAR^{®}) has become increasingly widespread.

However, the production of said articles of composite materials is usually made in an almost artisanal way, especially for manufacturing multi-shape articles (such as aerodynamic bumpers, tanks, etc.), since said articles require a production process which is complex and difficult to automate. In particular, one of the main causes of this complexity derives from the lamination process of the fibre, which involves making a fabric of fibrous material soaked in an epoxy resin adhere to a die with great precision. In particular, the fabric of fibrous material constitutes the so-called "reinforcements" of the composite material, while the polymer resin constitutes the so-called "matrix".

Due to the craftsmanship of the process, production times are obviously very long and the repeatability of a plurality of articles made of a composite material formed on the same die and identical to each other cannot be guaranteed. For example, operators (craftsmen) often do not pay attention to the direction of the pattern of the fibrous fabric and therefore the articles that are supposed to be identical, once they are finished, have different resistances to stress due to the difference in the arrangement of the pattern. Furthermore, lamination, being a manual operation, forcibly leads to imperfections, including, for example, resin deposits in the corners or cavities, which cause a weakening of the composite material (which in those areas does not have a correct amount of reinforcements) and a tendency to delamination of the article.

In addition, the non-repeatability of the production process involves a waste of fibrous fabric since the profiles to be laminated on the die are often overabundant, to compensate for an incorrect positioning on the die itself.

The aforesaid limitations therefore result in a waste of time and material.

Furthermore, the aforesaid limitations do not permit to ensure that the products of the same batch are identical and, are therefore related to difficulties in quality control and guarantees towards the end customer. In this regard, it is emphasized that it is not possible to determine from the outside the state of any intermediate layers of the article. Therefore, any errors during the manufacture of the intermediate layers of an article are not detectable during the quality control.

Document DE102008032574 discloses a system for the manufacture of fiber-reinforced components providing a positionable base frame comprising a controllable holding device for gripping and holding at least one reinforced fiber layer.

Document EP3348378 discloses a manufacturing method for aa composite material provided with a reinforcement and resin infused into the reinforcement.

Document EP1844914 discloses methods of making preforms, fiber-reinforced molded articles and fiber mats, wherein the methods use electroluminescent devices such as LED's and/or quantum dots.

Document WO2019107579 discloses a fiber stacking apparatus and method for manufacturing a direct preform.

Document DE102013103039 discloses a device and a method for the multi-stage production of a three-dimensional preform made of at least two layer structures.

### DESCRIPTION OF THE INVENTION

The object of the present invention is to provide a method for the production of an article made of a composite material, which is at least partially free from the drawbacks described above and, at the same time, is easy and economical to manufacture.

The object of the present invention is to provide an apparatus for the production of an article made of a composite material, which is at least partially free from the drawbacks described above and, at the same time, is easy and economical to manufacture.

In accordance with the present invention, a method is provided as defined in the attached independent claims, and preferably, in any one of the claims directly or indirectly dependent on the aforesaid independent claims.

According to the present invention, an apparatus is provided as defined in the attached independent claims, and preferably, in any one of the claims directly or indirectly dependent on the aforesaid independent claims.

### BRIEF DESCRIPTION OF THE DRAWINGS

The present invention will now be described with reference to the attached drawings, which illustrate non-limiting embodiments thereof, in which:
- Figure 1 is a plan and schematic view of a first embodiment of an apparatus according to the present invention;

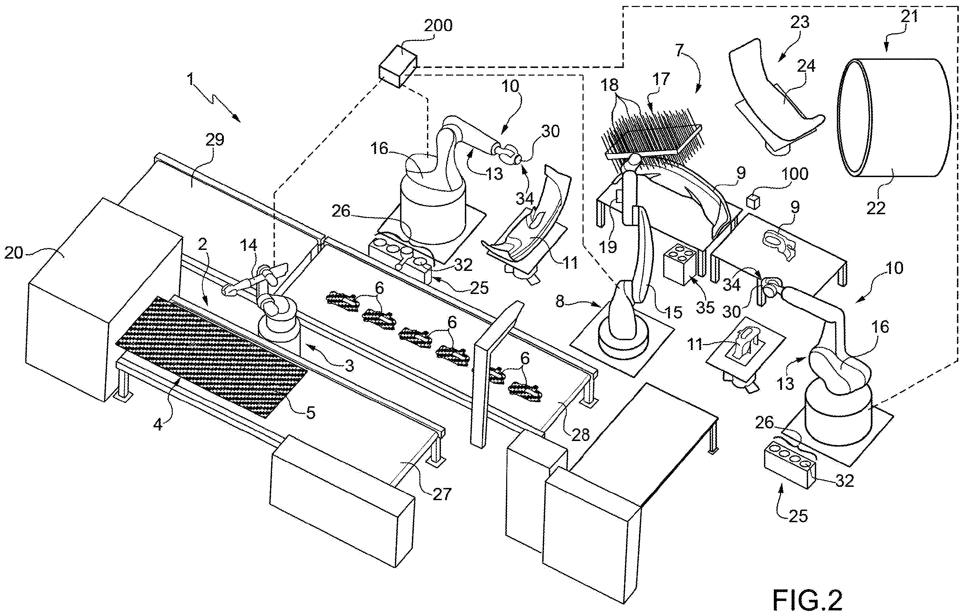

- Figure 2 is a first perspective and schematic view of the apparatus of Figure 1 in an operative configuration;

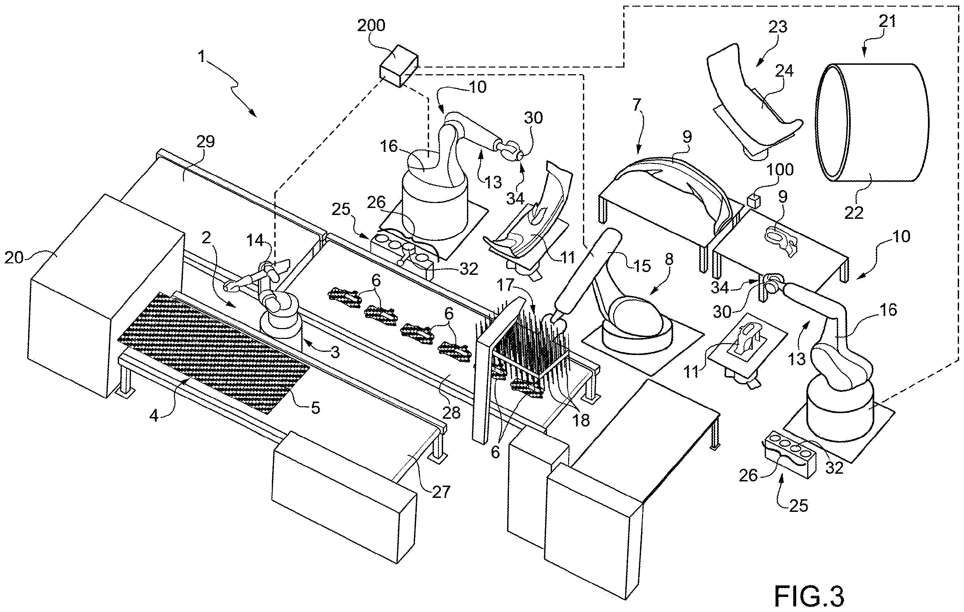

- Figure 3 is a second perspective and schematic view of the apparatus of Figures 1 and 2 in a further operative configuration;
- Figure 4 is a perspective view of a detail of the apparatus of Figures from 1 to 3;
- Figure 5 is a plan and schematic view of a second embodiment of an apparatus according to the present invention;

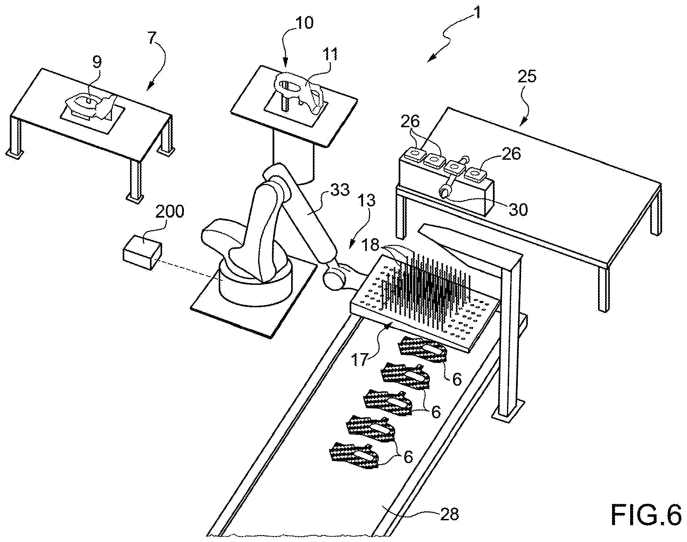

- Figure 6 is a first perspective and schematic view of the apparatus of Figure 5 in an operative configuration;
- Figure 7 is a second perspective and schematic view of the apparatus of Figures 5 and 6 in a further operative configuration; and
- Figure 8 illustrates a flow chart according to an embodiment of the method according to the present invention;
- Figure 9 is a plan and schematic view of a further embodiment of an apparatus according to the present invention;
- Figures from 10 to 12 illustrate in detail a detail of the apparatus according to the present invention;
- Figures from 13 to 15 illustrate in detail a further detail of the apparatus according to the present invention.

### PREFERRED EMBODIMENTS OF THE INVENTION

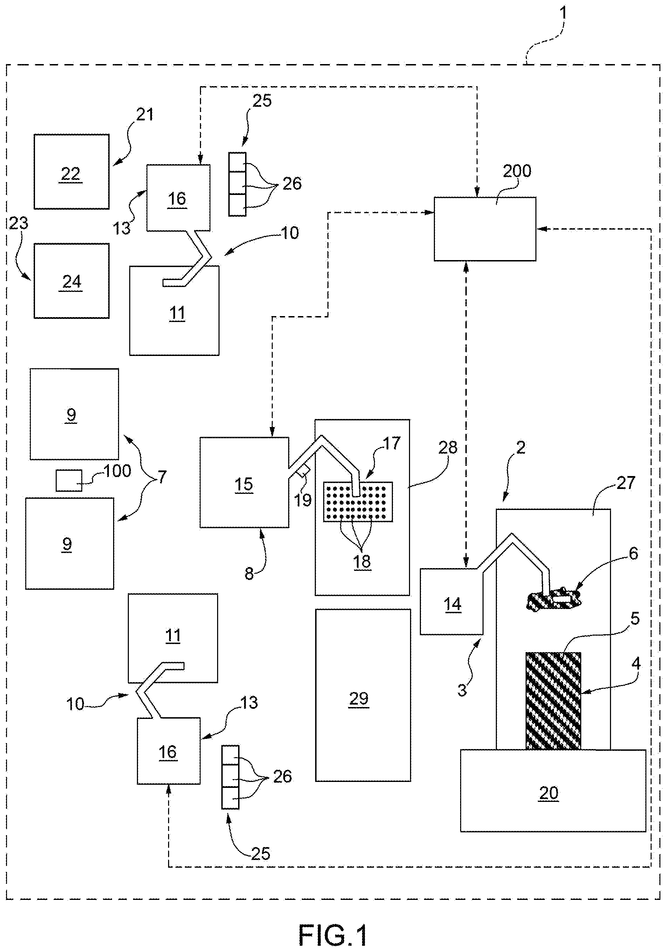

In Figure 1, the number 1 indicates as a whole an apparatus for the production of an article MM made of a composite material CM according to a possible and non-limiting embodiment of the present invention. The apparatus 1 comprises a cutting station 2, which in turn comprises a cutting system 3, which is configured to cut and obtain a profile 6 from a sheet 4 of fibrous fabric 5.

Advantageously, the apparatus 1 further comprises a pre-forming station 7, which in turn comprises an automatic pre-forming unit 8, which is configured to pre-form, in use, the profile 6 based (i.e. during operation) on a three-dimensional model 9.

According to some non-limiting embodiments such as those of Figures from 1 to 7, the model 9 is a physical three-dimensional model.

According to other non-limiting and not illustrated embodiments, the model 9 is a virtual three-dimensional model.

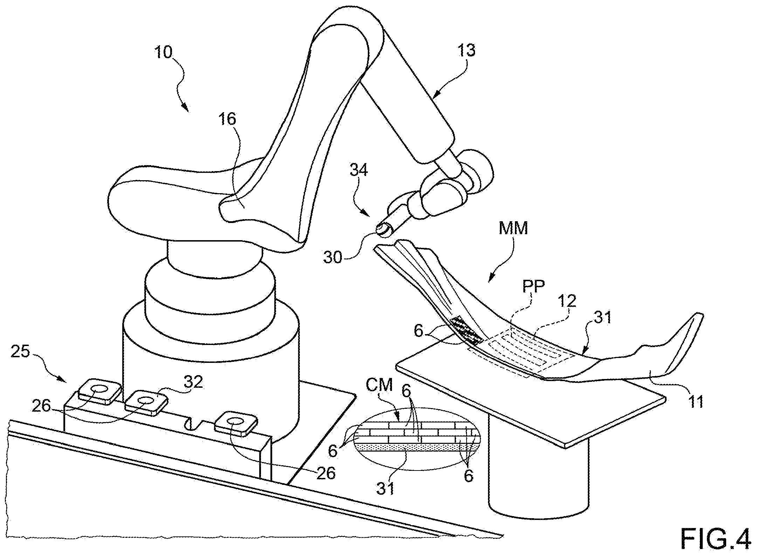

Advantageously, the apparatus 1 also comprises a lamination station 10, in turn, comprising a die 11, on which the automatic pre-forming unit 8 deposits the pre-formed profile 6 (previously pre-formed in the pre-forming station 7) on a respective forming portion 12 (illustrated in Figure 4) of the die 11.

In addition, the lamination station 10 comprises an automatic lamination unit 13, which is configured to laminate the profile 6 onto the die 11. Lamination means a process according to which the profile 6 is deformed under the action of a tool which compresses a respective portion of the profile 6 itself against an abutment surface, for example the model 9. Lamination takes place in respective portions of the profile with a same tool at different times, i.e. not simultaneously (contrary to what happens in moulding where the whole profile is deformed under the action of a die and counter-die) .

In some non-limiting cases, and as illustrated in the embodiments of Figures from 1 to 4, the cutting system 3 comprises an anthropomorphic robot 14.

According to some non-limiting and not illustrated embodiments, the cutting system 3 comprises, alternatively or in addition to the robot 14, other types of robots, such as for example collaborative robots (programmed to interact with operators and/or technicians both from a physical point of view to provide tools and avoid contacts, and for the transmission of information).

In some non-limiting cases, and as illustrated in the embodiments of Figures from 1 to 4, the automatic pre-forming unit 8 comprises an anthropomorphic robot 15.

According to some non-limiting and not illustrated embodiments, the automatic pre-forming unit 8 comprises, alternatively or in addition to the robot 15, other types of robots, such as for example collaborative robots (programmed to interact with operators and/or technicians both from a physical point of view to provide tools and avoid contacts, and for the transmission of information).

In some non-limiting cases, and as illustrated in the embodiments of Figures from 1 to 4, the automatic lamination unit 13 comprises an anthropomorphic robot 16.

According to some non-limiting and not illustrated embodiments, the automatic lamination unit 13 comprises, alternatively or in addition to the robot 16, other types of robots, such as for example collaborative robots (programmed to interact with operators and/or technicians both from a physical point of view to provide tools and avoid contacts, and for the transmission of information) and/or Cartesian machines.

In the non-limiting embodiment of Figures from 1 to 4, the apparatus comprises two automatic lamination units 13. In this way, since lamination is the slowest processing that the article MM made of a composite material CM must undergo, it is possible to significantly speed up production by carrying out operations in parallel, or in masked time.

According to other non-limiting embodiments, a different number of automatic lamination units 13 and/or cutting systems 3 and/or automatic pre-forming units 8 are present and, consequently, a different number of the relative robots 14, 15 and 16.

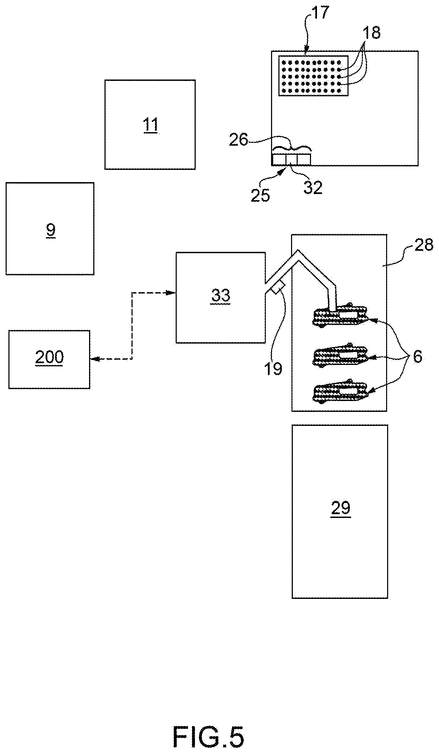

In the non-limiting embodiment of Figure 5, the cutting system 3, the automatic pre-forming unit 8 and the automatic lamination unit 13 comprise a single robot 33. In particular, the robot 33 comprises, in a known and schematically illustrated manner, a working end 34, generally known as an end effector, which performs the various functions by automatically changing its operation.

Advantageously but not necessarily, and as illustrated in the non-limiting embodiments of figures from 2 to 4, 6 and 7, the automatic pre-forming unit 8 comprises a gripper 17 with retractable stems 18.

According to the non-limiting embodiment of figures from 2 to 4, 6 and 7, using the gripper 17, the automatic pre-forming unit 8, once the sheet 4 of fibrous fabric 5 has been picked up, pre-forms said sheet 4 by resting on the model 9, which in these embodiments is a physical model. In other words, in use, the gripper 17 picks up the sheet 4 and, through the contact of the stems 18 with the model 9, pre-forms the sheet 4 in such a way as to allow the deposition of the same already partially formed which facilitates the lamination thereof.

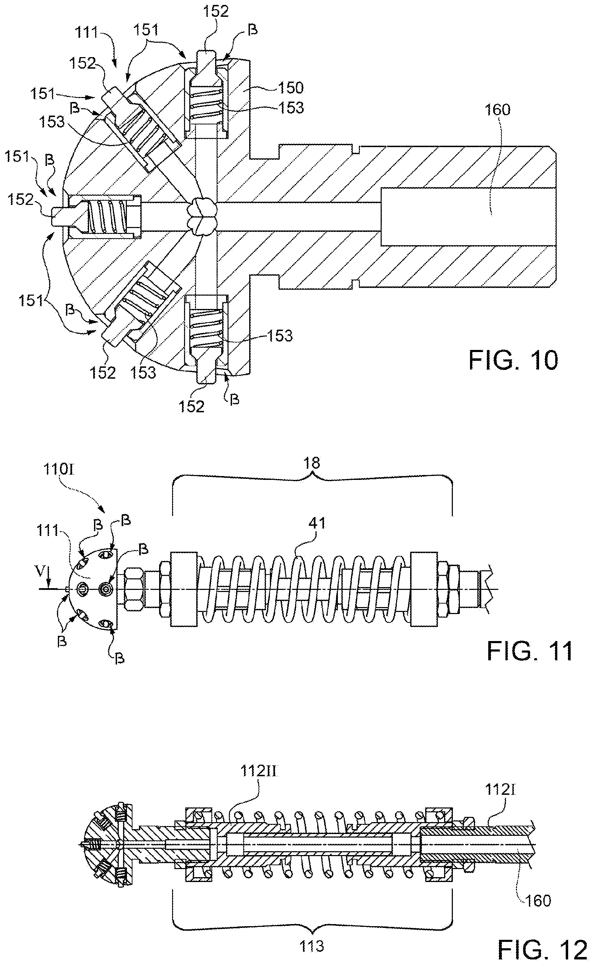

Advantageously, according to what is illustrated in Figure 11, each stem 18 has a gripping end 110I provided with a retaining unit 111 configured to retain, in use, a respective portion α of the sheet 4 of flexible material.

Advantageously, the retaining unit 111 is a suction system as will be better illustrated hereinbelow. In particular, the stem 18 comprises two bars, hereinafter referred to as 1121 and 112II (Figure 12), and a transmission system 113 which connects the two bars 1121 and 112II to each other. In particular, the transmission system 113 is configured to cause the displacement of a bar 1121 (112II) based on the other bar 112II (112I).

According to the example illustrated in Figure 10 in detail, each retaining unit 111 comprises a spherical cap 150 which is connected, in a known and schematically illustrated manner, to a suction duct 160 (i.e. placed in depression). Each spherical cap 150 in turn comprises a plurality of gripping devices 151 which protrude outside the spherical cap 150 at a respective gripping area β. Advantageously, the gripping areas β are uniformly distributed on the outer surface of the spherical cap 150. The gripping devices 151 are suction elements, in particular elastically retractable tactile suction cups. According to the illustrated example, each gripping device 151 comprises a feeler 152 which is mounted movably from an external position to an internal position. Elastic return elements 153, according to the example a helical spring, are provided to keep the feeler 152 in the external position. When it is in the internal position, the feeler 152 puts the gripping area β in communication with a suction duct.

Advantageously, the fact of using a spherical cap 150 allows to obtain a retaining element with an ergonomic shape which adapts better, compared to other types of traditional retaining systems, to the sheet 4 and allows a better modelling of the sheet 4 itself. Advantageously, the use of a spherical cap 150 allows the gripping devices 151 to be positioned substantially all around a predefined point, ensuring greater probability of being able to arrange a gripping device 151 in contact with a respective area of the sheet 4.

Figures from 13 to 15 illustrate a preferred embodiment of the gripper 17. As illustrated in Figures from 13 to 15, the free ends 110I (110II) are opposed and are automatically displaced in a specular manner by the transmission system 115. The translation of a free end 110I (110II) ends up in contact with the sheet 4.

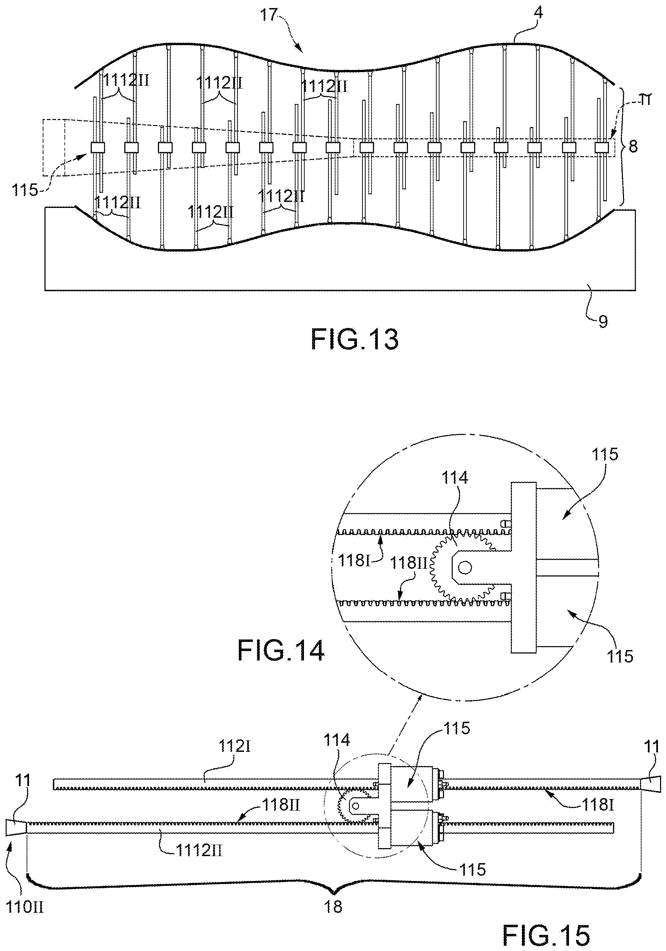

Once the translation of a predefined number of stems 18 which retain the sheet 4 is finished, they assume a reciprocal position equal to the one of the respective gripping ends 110II (110I) in contact with the model 9, in this way a modelling of the sheet 4 specular to the shape of model 9 is substantially obtained, as schematically illustrated in figure 13. In other words, a modelling of the sheet 4 corresponding to the negative of model 9 is obtained.

Advantageously, once the forming step is finished, the stems 18 are blocked, in this way it is possible to actuate the gripper 17 by keeping the sheet 4 stationary and modelled as predefined and to subject the sheet 4 to any further processing steps.

From the disclosure above, the gripper 17 allows to use a plurality of stems 18, which adapt to a model 9. In this way, a more precise modelling of even complex shapes is possible, compared to what can be obtained from systems of the known type.

Advantageously, the gripper 17 is provided with a transmission system 115 of the length of each stem 18. In this way, advantageously, the gripper 17 is able to regulate the length of each stem 18, on the basis of project data, in advance, based on the transformation of the sheet 4 from 2D to 3D.

According to the example illustrated in Figure 15, the regulation of the length of the stem 18 takes place by means of a rack system. In particular, the transmission system 115 comprises a toothed wheel 114 that meshes simultaneously with a linear gear 118I (i.e. a toothed wheel with infinite radius) made on the bar 112I and a linear gear 118II made on the bar 112II. It can be seen that Figure 15 illustrates a variant of the gripping ends 110I and 110II which substantially comprises suction cups, instead of the sphere illustrated in Figures from 10 to 12.

According to other non-limiting and not illustrated embodiments, the stems 18 of the gripper 17 are motorized, in particular individually, and model the sheet 4 on the basis of a virtual model 9. In other words, in use, the gripper 17 picks up the sheet 4 and through the knowledge of the virtual three-dimensional model commands the motorized stems so as to make them assume a position substantially equal to the one they would have assumed by resting on the physical die 9.

Advantageously, the apparatus 1 further comprises one or more heating lamps 35 positioned at the pre-forming station 7. Each heating lamp 35 is configured to soften, in use, a profile 6 prior to pre-forming.

Advantageously, the apparatus 1 comprises one or more three-dimensional sensors 19. In particular, a three-dimensional sensor 19 is a vision system, which is configured to identify the position in the space of the model 9 (which in the embodiments of Figures from 1 to 7 is a physical model) relative to the automatic pre-forming unit 8.

In particular, the three-dimensional sensor 19 is also configured to identify the position in the space of the die 11 relative to the automatic lamination unit 13.

According to the example illustrated in Figures from 1 to 3, the apparatus 1 further comprises a sensor 100 configured to identify the exact position of the profile 6 on the gripper 17 after pre-forming. Advantageously, the sensor 100 is a 3D camera. Advantageously, by means of the sensor 100 it is possible to control the deformed material before the subsequent step.

In other non-limiting and not illustrated embodiments, various three-dimensional sensors 19 are present (movable and/or fixed).

In some non-limiting cases such as those illustrated in the attached figures, the sensor 19 is integral with the automatic pre-forming unit 8. In particular, the sensor 19 is mounted on the pre-forming robot 15. Alternatively, the sensor 19 is a stand-alone element so as to be able to release/withdraw it if necessary on/from a tool magazine 25, as will be better illustrated hereinbelow.

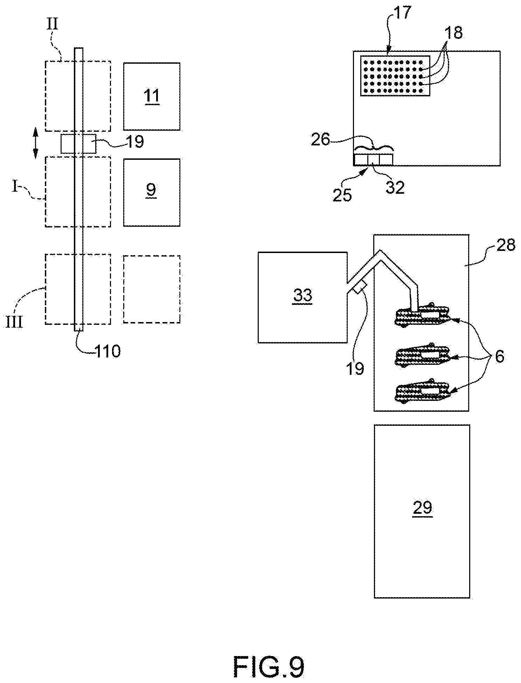

According to the embodiment illustrated in Figure 9, the sensor 19 is movably mounted on a fixed portal 110 having three positions I, II, III.

In position I, the sensor 19 determines the position in the space of the model 9 relative to the automatic pre-forming unit 8.

In position II the sensor 19 identifies the position in the space of the die 11 relative to the automatic lamination unit 13.

In position III, the sensor 19 identifies the exact position of the profile 6 on the gripper 17 after pre-forming (in fact, during the pre-forming operation, slight deviations of the profile 6 may occur).

In the non-limiting embodiments of Figures from 1 to 4, the apparatus 1 comprises a storage unit 20, in particular an automated storage unit and configured to provide the cutting station 2 with the sheet 4 of fibrous fabric 5.

In the non-limiting embodiment of Figures from 1 to 7, the apparatus 1 also comprises a baking station 21, in turn comprising an autoclave 22.

In the non-limiting embodiment of Figures from 2 to 4, 6 and 7, the apparatus 1 also comprises a compression station 23, in turn comprising a vacuum bag 24 and a vacuum pump (known and not illustrated).

In the non-limiting embodiment of Figures from 1 to 7, the apparatus 1 also comprises a tool magazine 25, which is arranged close to the lamination station 10 and is configured to provide the automatic lamination unit 13 with one or more tools 26 with different shapes. Advantageously but not necessarily, the die 11 and/or the tools 26 can be heated up.

According to a variant not illustrated, the die 11 is mounted on a movable support, for example a motorized drive, which cooperate with the lamination robot 16, so as to displace and/or orient the die 11 to facilitate the lamination operation.

In the non-limiting embodiment of Figures from 5 to 7, the tool magazine 25 can also comprise: the gripper 17 with stems; and/or the cutting system 3, for example a knife; and/or a scanning system 32. In the embodiment illustrated in Figure 5, the robot 33 can perform one or more of the following operations, according to need: cutting; pre-forming; lamination; scanning. The robot 33 can perform the different operations by changing the functionality of the end effector 34.

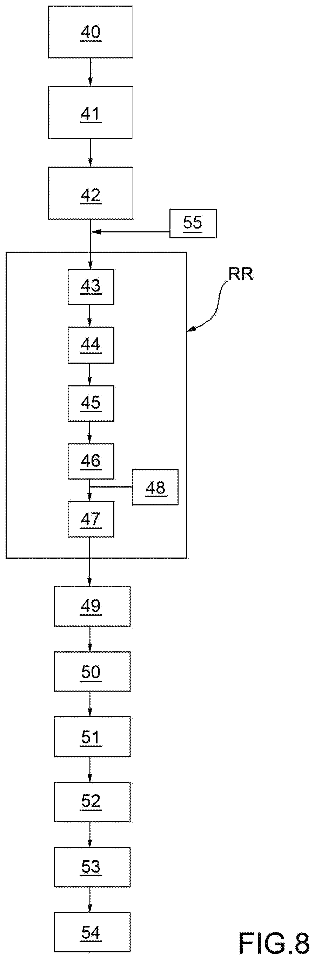

A method for manufacturing an article MM made of a composite material CM will be described hereinbelow. In particular, the method will be described with reference to Figure 8, which illustrates a block diagram that describes a possible embodiment of the aforesaid method.

In particular, the method provides for a step 40 of supplying a sheet 4 of fibrous fabric 5. Said fibrous fabric 5 acts, in use, as a reinforcement element of the article MM made of a composite material CM. More precisely, the automated storage unit 20 provides the cutting system 3 with a sheet 4 of the size necessary to be able to obtain a profile 6 with a preset shape and size.

Advantageously but not necessarily, the sheet 4 is blocked on a cutting belt 27 by suction.

The method further comprises a cutting step 41, during which the cutting system 3 cuts the profile 6 from the sheet 4 of fibrous fabric 5.

According to the non-limiting embodiment of Figures from 1 to 7, in particular following the cutting step 41, if the subsequent units (in particular the automatic pre-forming unit 8) are not immediately available, the profile 6 is stored in a local storage system 28, otherwise, the profile 6 is withdrawn by the automatic pre-forming unit 8.

Advantageously but not necessarily (especially if there is a physical model 9 like in the embodiments of the attached figures), *one-off,* i.e. whenever the model 9 (and consequently the die 11) to be used for the formation of the article MM is changed, the method comprises a scanning step 42 during which the three-dimensional sensor 19 detects the position in the space of the (physical) model 9 and of the die 11 and communicates it to the automatic pre-forming unit 8. In other words, the three-dimensional sensor 19 (i.e. the vision system) scans the model 9 in order to identify its position in the space relative to a known reference system, in particular inertial one (such as for example the base of the robot 15 of the pre-forming station 7). In this way, during the subsequent steps, the apparatus 1 (in particular controlled by a known and not illustrated control unit) knows the distances and the movements to be accomplished for a correct manufacture of the article MM made of a composite material.

Alternatively or in addition, *one-off,* i.e. whenever the die 11 to be used for forming the article MM is changed, during the scanning step 42, the three-dimensional sensor 19 detects the position in the space of the die 11 and communicates it to the automatic pre-forming unit 8. In other words, the three-dimensional sensor 19 (i.e. the vision system) scans the die 11 in order to identify its position in the space relative to a known reference system, in particular inertial one (such as for example the base of the robot 15 of the pre-forming station 7). In this way, during the subsequent steps, the apparatus 1 (in particular controlled by a known and not illustrated control unit) knows the distances and the movements to be accomplished for a correct manufacture of the article MM made of a composite material.

Advantageously but not necessarily, the method comprises a regulation step 55 during which the length of each stem 18 of the gripper 17 is regulated. The length of each stem 18 is regulated based on the transformation from 2D to 3D to be applied to the sheet 4.

Advantageously but not necessarily, the method comprises a gripping step 43, during which the automatic pre-forming unit 8 (i.e. the robot 15) picks up the profile 6 with the gripper 17 with retractable stems 18. In particular, once the profile 6 has been picked up, the gripper 17 is positioned (block 44 of Figure 8) close to one or more heating lamps. In this way, the profile 6 is softened (structurally) facilitating the subsequent forming, depositing and lamination operations.

Advantageously, in particular once the profile 6 has been heated up following step 44, the method comprises a pre-forming step 45, during which the automatic pre-forming unit 8 picks up the profile 6 and deforms it based on a physical or virtual three-dimensional model 9.

According to the non-limiting embodiments of the attached figures, the model 9 is a physical model that acts as a reference for the deformation of the profile 6. In other words, the model 9 represents the positive or the negative of the article MM. In some non-limiting cases, the model 9 is a die (in particular the same as the die 11) . In other non-limiting cases, the model 9 is a finished article MM. In particular, if the model 9 represents the positive, the gripper 17 with stems 18 deforms the profile 6 similarly to the model 9, whereas, if the model 9 represents the negative, the gripper 17 with stems 18 deforms the profile 6 specularly to the model 9. In the respective cases, the gripper 17 is overturned (rotated by 180°) in order to satisfy the mounting requirements or to exploit gravity in positioning the stems 18 on the model 9.

According to other non-limiting and not illustrated embodiments, the model 9 is a virtual model that acts as a reference for the deformation of the profile 6. In other words, the stems 18 are motorized and deform the profile 6 based on the virtual model. Therefore, the pre-forming step 45 is carried out during the displacement of the profile 6 from the working belt 28 to the lamination station 10 (i.e. to the forming portion 12 of the die 11).

Advantageously, the method comprises a depositing step 46, subsequent to the cutting step 41 (and, in particular, subsequent to the pre-forming step 45), during which the automatic pre-forming unit 8 releases the pre-formed profile 6 onto the respective forming portion 12 of the die 11, which reproduces the final shape of the article MM to be produced. In particular, the forming portion 12 is that surface of the die 11 onto which the automatic pre-forming unit 8 (more precisely the gripper 17) rests the pre-formed profile 6.

Advantageously, the method comprises a lamination step 47, subsequent to the depositing step 46, and during which the automatic lamination unit 13 processes the pre-formed profile 6 substantially causing it to adhere to the forming portion 12 by means of one or more lamination tools 30, each of which can be connected to the working end 34 (i.e. end effector) of the robot 16 interchangeably.

Once the depositing step 46 has been completed, advantageously but not necessarily, the method comprises a processing step 48, during which the automatic lamination unit 13 (or a control unit to which it is connected) processes one or more lamination paths PP using a three-dimensional virtual model of the forming portion 12 of the die 11 and/or the position in the space of the forming portion 12 of the die 11 detected by the three-dimensional sensor 19. In particular, according to some non-limiting embodiments, each lamination path PP is processed using a CAM (Computer-Aided-Manufacturing) software, which processes each path PP trying to optimize, as much as possible, the cost functions (time, quality, energy, etc.).

According to some non-limiting embodiments, the fibrous fabric 5 (i.e. the profile 6) is soaked in a matrix, in particular a polymer matrix, during the lamination step 47.

Alternatively or in addition, the fibrous fabric 5 (i.e. the profile 6) is soaked by the matrix in other steps of the process, such as for example prior the cutting step 41, or at the end of the lamination step 47.

In some non-limiting cases, the matrix comprises a resin, in particular an epoxy resin, which has thermosetting properties and which allow the article MM to complete its formation in an autoclave, considerably increasing its strength.

In other non-limiting cases, the matrix comprises a resin, in particular with thermoplastic properties (e.g. Nylon)

Advantageously but not necessarily, during the lamination step the die 11 and/or the lamination tool 30 are heated up.

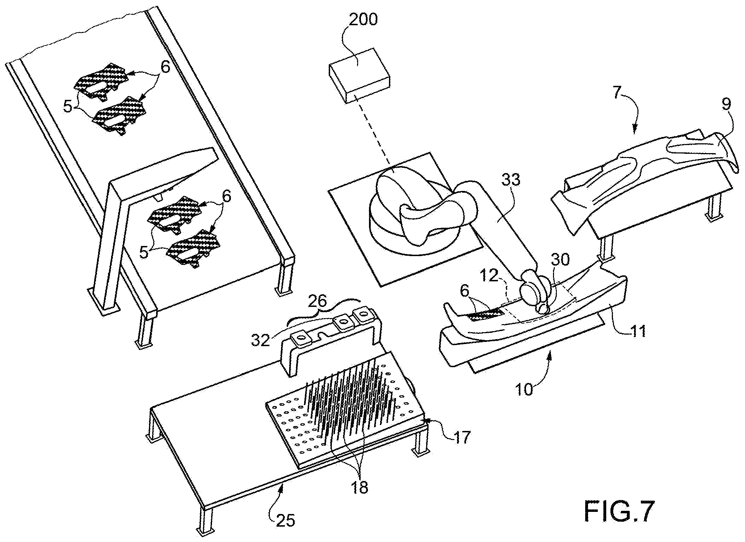

According to some non-limiting embodiments, the cutting step 41, the pre-forming step 45, the depositing step 46 and the lamination step 47 are repeated until a base layer 31 of composite material CM is obtained, which at least partially covers the forming portion 12. In Figure 7, for example, the steps inside the box RR are repeated until the base layer 31 is obtained. In particular, the composite material CM is composed of an outer layer, which corresponds to the base layer 31 and a plurality of inner layers. In other words, the base layer 31 is the one which, at the end of the production of the article MM, will make up the outer layer and, therefore, requires certain aesthetic characteristics which, on the other hand, can be neglected for the inner layers of the composite material CM (for example the continuity of the layer, the orientation of the pattern of the fibrous fabric 5 generally also called pattern opening, etc.).

Advantageously but not necessarily, in particular following the manufacture of the base layer 31, the method comprises a control step 49, during which a scanning system 32 (for example a vision system or an infrared sensor) analyses the base layer 31 to determine (if any) geometric and/or pattern defects of the fibrous fabric 5.

In some non-limiting cases, in particular where possible (for example in the case of a pattern orientation defect of two adjacent profiles 6) the scanning system 32 alerts an operator in order to adjust the defect.

In other non-limiting cases, the scanning system 32 causes a defect adjustment operation to be triggered by the automatic lamination unit 13 by means of one of the tools 26 that are available in the tool magazine 25.

Advantageously, the scanning system 32 communicates with an external control unit 200 comprising, for example, a data management unit and a memory unit and/or an interface system for exchanging data with the outside. Advantageously, the control unit 200 is configured to exchange data with each robot 14, 15, 16; 33 to regulate, in particular synchronize, the operation of each robot 14, 15, 16; 33 based on the particular type of article to be made.

According to some non-limiting embodiments, in particular following the control step 49 (more precisely once the control step 49 has been successfully concluded and no defects have been detected on the base layer 31), the method provides for (at least) the cutting step 41, the pre-forming step 45, the depositing step 46 and the lamination step 47 (in particular all the steps enclosed by the repetition rectangle RR illustrated in Figure 8) to be repeated for the manufacture of further layers of profiles 6 on respective areas of the base layer.

In other words, a plurality of profiles 6 is applied and processed on the base layer 31 so as to give thickness to the article MM. In particular, the further layers require a lower application precision since they will be invisible layers of the final article MM and therefore require less aesthetics.

In some non-limiting cases, the control step 49 is repeated randomly after a certain period of time or after a finite number of lamination steps 47.

In other non-limiting cases, the control step 49 is carried out only for the base layer and/or for the article MM once the lamination is completed.

According to some non-limiting embodiments, the thickness and/or the number of further layers is variable along the base layer 31. In particular, in areas where greater strength is required (due to mechanical stresses or for future processing of the article, such as trimming of excess material and/or perforations, etc.) there are more layers of profiles 6, whereas in the areas where a greater elasticity is required there are fewer layers of profiles 6.

Advantageously but not necessarily, the method comprises (at least) a compression step 50 (Figure 7), during which the die 11 is closed in the vacuum bag 24 and the air inside the vacuum bag is substantially eliminated so as to compress the composite material CM on the die 11.

According to some non-limiting embodiments, the compression step 50 is subsequent to the control step 49 and, in particular, it precedes the depositing and the lamination of the further layers of profiles 6. In this way, the layer 31 is made to adhere accurately to the die 11, determining a good adhesion of the base layer 31 even in the presence of very narrow niches or grooves.

According to some advantageous but not limiting embodiments, prior to the compression step 50, the (at least part of) the vacuum bag 24 was shaped according to the forming die 11 so as to match the shape thereof. In other words, the vacuum bag 24 is a container (in particular composed of several parts) which follows the shape of the die 11 and therefore also of the base layer 31. In this way, once the bag is closed with the die 11 inside and the semi-finished article MM is above it, the residual air between the vacuum bag 24 and the article MM or the base layer 31 is significantly lower compared to the air that would be residual in a conventional vacuum bag, the shape of which would not match the one of the die 31. Above all, thanks to the fact that the vacuum bag 24 is shaped based on the die 11, it allows to considerably reduce the times for emptying the air. In fact, the solution of the present invention makes it possible to reduce by about 80% the times for emptying the vacuum bag 24, compared to traditional methods (for which the bag is not pre-formed).

In some non-limiting cases, the vacuum bag 24 is made of polymer material (for example silicone).

According to some non-limiting embodiments, the vacuum bag is made by solidifying a polymer material sprayed on the die. This material, once it is hardened, forms the wall of the vacuum bag 24.

Advantageously but not necessarily, the method comprises a baking step 51, during which the die 11, with applied thereon, (in particular laminated) the layers of composite material CM (i.e. the layers of profiles 6), in particular comprising the fibrous fabric 5 and the (polymer) matrix, is subjected to baking cycles in an autoclave. More precisely, during the baking step 51, the semi-finished article MM (i.e. when lamination is ended) is inserted into the autoclave 22.

According to some non-limiting embodiments, before being inserted into the autoclave 22, the semi-finished article MM (that is, when lamination is ended) is previously inserted into the vacuum bag 24.

In particular, the use of the vacuum bag 24, having the shape of the die 11 and therefore of the article MM, speeds up (in particular halves) the times of the baking step 51.

In some non-limiting cases, the method comprises a measurement step 52, in particular subsequent to the baking step 51, during which the article MM is positioned on a dedicated template and a vision system (of a known type and not illustrated) detects precisely the measurements of the article MM and compares them to reference measurements. In particular, following the comparison, the vision system determines whether an article MM is good (i.e. within certain predetermined tolerances), or to be rejected.

According to some non-limiting embodiments, in particular following a measurement step 52, the method comprises the further step of trimming the excess material from the article MM and/or making any perforations for fixing elements (for example screws or rivets), and/or finishing processings.

According to further non-limiting embodiments, alternatively or in addition, the method comprises a painting step, during which the article MM is covered with a (transparent) paint, in particular a scratch-resistant and/or waterproof protective paint.

The main advantages of the method and of the apparatus 1 described above are many.

Advantageously, the present invention allows to realise an apparatus and to produce an article MM made of a composite material CM, considerably increasing the productivity and precision of the final article MM with respect to the artisanal techniques used up to now. In particular, by means of the method described above it is possible to manufacture articles MM with repeatable mechanical characteristics since the aforesaid apparatus allows the profiles to be positioned with care while also respecting the pattern requirements and it also allows to distribute the polymer matrix during lamination in a uniform way, avoiding resin deposits in the corners that are typical of manual processing.

Advantageously, unlike other processes such as moulding, lamination makes it possible to obtain articles MM with high quality in the details: sharp edges, folds and slots of even millimetre dimensions.

Advantageously, the pre-forming step allows to speed up the lamination operations, which, thanks to the tool magazine 25 of the robot 16, are made using different tools suitable for the shape of the forming portion 12 to be processed.

Furthermore, the use of a pre-formed vacuum bag 24, which matches the shape of the die 11 and of the article MM, allows to drastically reduce the times of the autoclave cycles and the compression step, since the air present inside the bag (to be eliminated) turns out to be minimal compared to prior art solutions.

Finally, the method and the apparatus described above allow to reduce the consumption of material, since the profiles 6 cut by the cutting system 3 are optimized based on the shape of the forming portion 12 to be covered with the fibrous fabric 5, therefore, there will not be, as is the case with known techniques, large leftovers of fibrous material 5 avoiding complex operations (hydrolysis or high temperatures) to recycle it.

For example, the article MM illustrated in the attached figures could be used in the automotive field, where the lightness of the components in synergy with their strength becomes essential in high-performance cars, aeronautics and the like. In particular, the article MM could be any part of the bodywork (for example a bumper or fairing) of a high-performance sports vehicle.

According to other non-limiting examples, the articles MM can be any other object made of a composite material, in particular of carbon fibre.

From the disclosure above, advantageously, thanks to the presence of the robots 14, 15, 16; 33 and of the control unit 200 it is possible to automate the process of manufacturing articles made of a composite material. In fact, thanks to robots 14, 15, 16; 33, to the types of controls provided (in particular by means of the sensors 19, 100 and the scanning unit 32) and to the control unit 200 it is possible to obtain a synergy between the hardware and software of the apparatus 1, which allows obtaining a finished article by giving as an input: to the control unit 200 the data of the article to be executed; and a die 11 of the article.

Advantageously, according to the method and the apparatus of the present invention, the robots 14, 15, 16; 33 form an automated work island that allows obtaining finished articles in less time and of higher quality. In particular, the method and the apparatus according to the present invention allow obtaining articles with reproducible characteristics, that is articles that are substantially identical to each other and having all the same properties, being thus able to ensure a better quality control and a greater reliability.

## Claims

1. A method for the production of an article (MM) made of a composite material (CM); the method comprising:
- a step (40) of supplying a sheet (4) of fibrous fabric (5);
- a cutting step (41), during which a cutting system (3) cuts a profile (6) from the sheet (4) of fibrous fabric (5) ;
- a pre-forming step (45), during which an automatic pre-forming unit (8) picks up said profile (6) and deforms it based on a physical or virtual three-dimensional model (9) ;
- a depositing step (46), subsequent to the cutting step (41), during which the automatic pre-forming unit (8) releases the pre-formed profile (6) onto a respective forming portion (12) of a die (11), which reproduces the final shape of the article (MM) to be produced; and
- a lamination step (47), subsequent to the depositing step (46), during which an automatic lamination unit (13), by means of at least one lamination tool (30), processes the pre-formed profile (6), substantially causing it to adhere to the forming portion (12).

2. A method according to claim 1 and comprising a first scanning step (42), prior to the pre-forming step (45), during which a three-dimensional sensor (19) detects the position in the space of a physical model (9) and communicates it to the automatic pre-forming unit (8).

3. A method according to any one of the preceding claims and comprising a second scanning step (42), prior to the depositing step (46), during which the three-dimensional sensor (19) detects the position in the space of the forming portion (12) of the die (11) and communicates it to the automatic pre-forming unit (8).

4. A method according to any one of the preceding claims, wherein the automatic lamination unit (13) processes one or more lamination paths using a virtual three-dimensional model (9) of the forming portion (12) of the die (11) and/or the position in the space of the forming portion (12) of the die (11) detected by the three-dimensional sensor (19) .

5. A method according to any one of the preceding claims, wherein, during the lamination step (47), the fibrous fabric (5) is soaked in a matrix, in particular a polymer matrix; and wherein, during the lamination step (47), the die (11) and/or the lamination tool (30) are heated up.

6. A method according to any one of the preceding claims, wherein the cutting step (41), the pre-forming step (45), the depositing step (46) and the lamination step (47) are repeated until a base layer (31) of composite material (CM) is obtained, which at least partially covers the forming portion (12).

7. A method according to claim 6 and comprising a control step (49), during which a control system (32) analyses the base layer (31) to determine geometric defects and/or pattern defects of the fibrous fabric (5) and, if necessary, in particular, to correct them.

8. A method according to any one of the preceding claims, wherein in particular following the control step (49) the cutting step (41), the pre-forming step (45), the depositing step (46) and the lamination step (47) are repeated in order to manufacture further layers of profiles on respective areas of the base layer (31).

9. A method according to any one of the preceding claims and comprising at least one compression step (50), during which the die (11) is closed in a vacuum bag (24) and the air inside the vacuum bag (24) is substantially eliminated so as to compress the composite material (CM) on the die (11).

10. A method according to claim 9, wherein, prior to the compression step (50), at least part of the vacuum bag (24) is shaped based on the base of the forming portion (12) so as to match the shape thereof.

11. A method according to any one of the preceding claims and comprising a baking step (51), during which the die (11) with, applied thereon, the layers of composite material (CM), in particular comprising the fibrous fabric (5) and the matrix, is subjected to baking cycles in autoclave (22).

12. A method according to any of the preceding claims, and comprising a regulation step (55) prior to the pre-forming step (45) during which an automatic pre-forming unit (8) picks up said profile (6) and deforms it based on a physical or virtual three-dimensional model (9); wherein the automatic pre-forming unit (8) comprises a gripper (17), which in turn comprises a plurality of stems (18) and a transmission system (115); wherein the regulation step (55) comprises varying the length of each stem (18) based the transformation of the sheet (4) from 2D to 3D to be carried out.

13. An apparatus for the production of an article (MM) made of a composite material (CM) comprising:
- a cutting station (2), which comprises a cutting system (3), which is configured to cut and obtain a profile (6) from a sheet (4) of fibrous fabric (5);
- a pre-forming station (7), which comprises an automatic pre-forming unit (8), which is configured to preform, in use, the profile (6) based on a physical or virtual three-dimensional model (9);
- a lamination station (10) comprising a die (11), on which the automatic pre-forming unit (8) deposits the pre-formed profile (6) on a respective forming portion (12) of the die (11), and an automatic lamination unit (13), which is configured to laminate the profile (6) onto the die (11).

14. An apparatus according to claim 13, wherein the cutting system (3) and/or the automatic pre-forming unit (8) and/or the automatic lamination unit (13) comprise a robot (14, 15, 16, 33), in particular an anthropomorphic robot.

15. An apparatus according to claim 13 or 14, wherein the automatic pre-forming unit (8) comprises a gripper (17) with retractable stems (18); wherein the gripper (17) comprises, in turn, a transmission system (115) which regulates the length of each stem (18).

16. An apparatus according to claim 15, wherein the gripper (17) with retractable stems (18) is a rack system; wherein each stem (18) is formed by two opposed bars (112I, 112II); wherein the transmission system (115) comprises a toothed wheel (114) that meshes simultaneously with a first linear gear (118I) made on a first bar (112I) and a second linear gear (118II) made on the second bar (112II).

17. An apparatus according to any claim from 13 to 16, wherein the automatic pre-forming unit (8) comprises one or more stems (18); each stem (18) having a gripping end (110I) provided with a retaining unit (111) configured to retain, in use, a respective portion (α) of the sheet (4) of flexible material; each retaining unit (111) comprising:
- a spherical cap (150) which is fluidically connected to a suction duct (160);
- a plurality of gripping devices (151) which protrude outside the spherical cap (150) at a respective gripping area (β).

18. An apparatus according to claim 17, wherein the gripping areas (β) are uniformly distributed on the outer surface of the spherical cap (150); wherein each gripping device (151) comprises:
- a feeler (152) which is mounted movably from an external position to an internal position;
- elastic return elements (153), in particular a helical spring, to push the feeler 152 towards the external position.

19. An apparatus according to any claim from 13 to 18 and comprising a sensor (100; 19), in particular a vision system, which is configured to identify the exact position of the profile (6) on said gripper (17).

20. An apparatus according to any claim from 13 to 19 and comprising at least one three-dimensional sensor (19), in particular a vision system, which is configured to identify the position in the space of a physical model (9) relative to the automatic pre-forming unit (8); in particular, the at least one three-dimensional sensor (19) is also configured to identify the position in the space of the die (11) relative to the automatic lamination unit (13).

21. An apparatus according to one of the claims from 13 to 20 and comprising a storage unit (20), in particular an automated storage unit, which is configured to provide the cutting station (2) with the sheet (4) of fibrous fabric (5); and/or a baking station (21) comprising an autoclave (22); and/or a compression station (23) comprising a vacuum bag (24) and a vacuum pump; and/or a tool magazine (25), which is arranged close to the lamination station (10) and is configured to provide the automatic lamination unit (13) with one or more tools (26) with different shapes, in particular, the die (11) and/or the tools (26) can be heated up.

## Patentansprüche

1. Verfahren zur Herstellung eines Gegenstandes (MM) aus einem Verbundmaterial (CM), umfassend:
- einen Schritt (40) zum Bereitstellen einer Bahn (4) aus Fasergewebe (5);
- einen Schneideschritt (41), bei dem ein Schneidesystem (3) ein Profil (6) aus der Bahn (4) aus Faserstoff (5) schneidet;
- einen Vorformungsschritt (45), bei dem eine automatische Vorformungseinheit (8) das Profil (6) aufnimmt und es auf der Grundlage eines physischen oder virtuellen dreidimensionalen Modells (9) verformt;
- einen Ablageschritt (46) im Anschluss an den Schneideschritt (41), bei dem die automatische Vorformungseinheit (8) das vorgeformte Profil (6) auf einen entsprechenden Formgebungsabschnitt (12) einer Form (11) abgibt, die die endgültige Form des herzustellenden Artikels (MM) erzeugt; und
- einen Laminierungsschritt (47) im Anschluss an den Ablageschritt (46), bei dem eine automatische Laminierungseinheit (13) mittels mindestens eines Laminierungswerkzeugs (30) das vorgeformte Profil (6) bearbeitet, wodurch es im Wesentlichen an dem Formgebungsabschnitt (12) anhaftet.

2. Verfahren nach Anspruch 1, das einen ersten Abtastschritt (42) vor dem Vorformungsschritt (45) umfasst, bei dem ein dreidimensionaler Sensor (19) die Position eines physischen Modells (9) im Raum erfasst und sie der automatischen Vorformungseinheit (8) mitteilt.

3. Verfahren nach einem der vorherigen Ansprüche und mit einem zweiten Abtastschritt (42) vor dem Ablageschritt (46), bei dem der dreidimensionale Sensor (19) die Position im Raum des Formteils (12) der Form (11) erfasst und an die automatische Vorformungseinheit (8) übermittelt.

4. Verfahren nach einem der vorherigen Ansprüche, wobei die automatische Laminiereinheit (13) einen oder mehrere Laminierpfade unter Verwendung eines virtuellen dreidimensionalen Modells (9) des Formteils (12) der Form (11) und/oder der vom dreidimensionalen Sensor (19) erfassten Position im Raum des Formteils (12) der Form (11) verarbeitet.

5. Verfahren nach einem der vorherigen Ansprüche, wobei während des Laminierungsschritts (47) das Fasergewebe (5) mit einer Matrix, insbesondere einer Polymermatrix, getränkt wird; und wobei während des Laminierungsschritts (47) die Form (11) und/oder das Laminierungswerkzeug (30) aufgeheizt werden.

6. Verfahren nach einem der vorherigen Ansprüche, wobei der Schneideschritt (41), der Vorformungsschritt (45), der Ablageschritt (46) und der Laminierungsschritt (47) wiederholt werden, bis eine Basisschicht (31) aus Verbundmaterial (CM) erhalten wird, die den Formgebungsabschnitt (12) zumindest teilweise bedeckt.

7. Verfahren nach Anspruch 6, umfassend einen Kontrollschritt (49), bei dem ein Kontrollsystem (32) die Basisschicht (31) analysiert, um geometrische Defekte und/oder Musterdefekte des Fasergewebes (5) zu ermitteln und, sofern erforderlich, insbesondere zu korrigieren.

8. Verfahren nach einem der vorherigen Ansprüche, wobei insbesondere im Anschluss an den Kontrollschritt (49) der Schneideschritt (41), der Vorformungsschritt (45), der Ablageschritt (46) und der Laminierschritt (47) wiederholt werden, um weitere Schichten von Profilen auf jeweiligen Bereichen der Basisschicht (31) herzustellen.

9. Verfahren nach einem der vorherigen Ansprüche, das mindestens einen Kompressionsschritt (50) umfasst, bei dem die Form (11) in einen Vakuumsack (24) eingeschlossen wird und die Luft im Vakuumsack (24) im Wesentlichen eliminiert wird, um das Verbundmaterial (CM) auf der Form (11) zu komprimieren.

10. Verfahren nach Anspruch 9, wobei vor dem Verdichtungsschritt (50) zumindest ein Teil des Vakuumsacks (24) auf der Grundlage der Basis des Formteils (12) so geformt wird, dass er dessen Form entspricht.

11. Verfahren nach einem der vorherigen Ansprüche mit einem Backschritt (51), bei dem die Form (11) mit den darauf aufgebrachten Schichten aus Verbundmaterial (CM), insbesondere aus dem Fasergewebe (5) und der Matrix, in einem Autoklaven (22) Backzyklen unterzogen wird.

12. Verfahren nach einem der vorherigen Ansprüche, mit einem Regulierungsschritt (55) vor dem Vorformungsschritt (45), bei dem eine automatische Vorformungseinheit (8) das Profil (6) aufnimmt und es auf der Grundlage eines physischen oder virtuellen dreidimensionalen Modells (9) verformt; wobei die automatische Vorformungseinheit (8) einen Greifer (17) umfasst, der seinerseits eine Vielzahl von Stielen (18) und ein Übertragungssystem (115) umfasst; wobei der Regulierungsschritt (55) das Variieren der Länge jedes Stiels (18) auf der Grundlage der auszuführenden Transformation des Blechs (4) von 2D zu 3D durchführt.

13. Vorrichtung zur Herstellung eines Artikels (MM) aus einem Verbundwerkstoff (CM), umfassend:
- eine Schneidestation (2), umfassend ein Schneidesystem (3), das ausgebildet ist, um ein Profil (6) aus einer Bahn (4) aus Fasergewebe (5) zu schneiden und zu erstellen;
- eine Vorformungsstation (7), die eine automatische Vorformungseinheit (8) umfasst, die so ausgebildet ist, dass sie im Gebrauch das Profil (6) auf der Grundlage eines physischen oder virtuellen dreidimensionalen Modells (9) vorformt;
- eine Laminierstation (10), die eine Form (11) umfasst, auf der die automatische Vorformeinheit (8) das vorgeformte Profil (6) auf einem entsprechenden Formabschnitt (12) der Form (11) ablegt, und eine automatische Laminiereinheit (13), die zum Laminieren des Profils (6) auf die Form (11) konfiguriert ist.

14. Vorrichtung nach Anspruch 13, wobei das Schneidsystem (3) und/oder die automatische Vorformeinheit (8) und/oder die automatische Laminiereinheit (13) einen Roboter (14, 15, 16, 33), insbesondere einen anthropomorphen Roboter, umfassen.

15. Vorrichtung nach Anspruch 13 oder 14, wobei die automatische Vorformeinheit (8) einen Greifer (17) mit einziehbaren Stielen (18) umfasst; wobei der Greifer (17) seinerseits ein Übertragungssystem (115) umfasst, das die Länge jedes Stiels (18) reguliert.

16. Vorrichtung nach Anspruch 15, wobei der Greifer (17) mit einziehbaren Stielen (18) ein Zahnstangensystem ist; wobei jeder Stiel (18) von zwei gegenüberliegenden Stangen (1121, 11211) gebildet wird; wobei das Übertragungssystem (115) ein Zahnrad (114) umfasst, das gleichzeitig mit einem ersten linearen Zahnrad (1181), das auf einer ersten Stange (1121) ausgebildet ist, und einem zweiten linearen Zahnrad (11811), das auf der zweiten Stange (11211) ausgebildet ist, in Eingriff steht.

17. Vorrichtung nach einem der Ansprüche 13 bis 16, wobei die automatische Vorformeinheit (8) einen oder mehrere Stiele (18) umfasst; wobei jeder Stiel (18) ein Greifende (1101) aufweist, das mit einer Halteeinheit (111) versehen ist, die so gestaltet ist, dass sie im Gebrauch einen jeweiligen Abschnitt (a) der Bahn (4) aus flexiblem Material hält; jede Halteeinheit (111) umfassend:
- eine kugelförmige Kappe (150), die strömungstechnisch mit einem Saugkanal (160) verbunden ist;
- eine Vielzahl von Greifvorrichtungen (151), die außerhalb der kugelförmigen Kappe (150) an einem jeweiligen Greifbereich (β) vorstehen.

18. Vorrichtung nach Anspruch 17, wobei die Greifbereiche (β) gleichmäßig auf der Außenfläche der kugelförmigen Kappe (150) verteilt sind; jede Greifvorrichtung (151) umfassend:
- einen Taster (152), der von einer äußeren Position zu einer inneren Position beweglich angebracht ist;
- elastische Rückstellelemente (153), insbesondere eine Schraubenfeder, um den Taster (152) in die äußere Position zu drücken.

19. Vorrichtung nach einem der Ansprüche 13 bis 18, die einen Sensor (100; 19), insbesondere ein Bildverarbeitungssystem, umfasst, der so gestaltet ist, dass er die genaue Position des Profils (6) auf dem Greifer (17) erkennt.

20. Vorrichtung nach einem der Ansprüche 13 bis 19, die mindestens einen dreidimensionalen Sensor (19), insbesondere ein Bildverarbeitungssystem, umfasst, der so gestaltet ist, dass er die Position eines physischen Modells (9) im Raum relativ zur automatischen Vorformeinheit (8) identifiziert; insbesondere ist der mindestens eine dreidimensionale Sensor (19) auch so gestaltet, dass er die Position der Form (11) im Raum relativ zur automatischen Laminiereinheit (13) identifiziert.

21. Vorrichtung nach einem der Ansprüche 13 bis 20, umfassend eine Lagereinheit (20), insbesondere eine automatisierte Lagereinheit, die dazu ausgebildet ist, die Schneidestation (2) mit der Folie (5) zu versorgen; und/oder eine Heizstation (21) (22); und/oder eine Verdichtungsstation (4) für Fasergewebe, umfassend einen Autoklaven (23) mit einem Vakuumsack (24) und einer Vakuumpumpe; und/oder ein Werkzeugmagazin (25), das in der Nähe der Laminierstation (10) angeordnet ist und dazu ausgebildet ist, die automatische Laminiereinheit (13) mit einem oder mehreren Werkzeugen (26) mit unterschiedlichen Formen zu versorgen, insbesondere können die Form (11) und/oder die Werkzeuge (26) aufgeheizt werden.

## Revendications

1. Procédé pour la production d'un article (MM) constitué d'un matériau composite (CM) ; le procédé comprenant :
- une étape (40) d'acheminement d'une feuille (4) de tissu fibreux (5) ;
- une étape de découpe (41), au cours de laquelle un système de découpe (3) découpe un profil (6) à partir de la feuille (4) de tissu fibreux (5) ;
- une étape de préformage (45), au cours de laquelle une unité de préformage automatique (8) saisit ledit profil (6) et le déforme sur la base d'un modèle (9) tridimensionnel physique ou virtuel ;
- une étape de dépôt (46), ultérieure à l'étape de découpe (41), au cours de laquelle l'unité de préformage automatique (8) libère le profil préformé (6) sur une partie de formage (12) respective d'un moule (11), qui reproduit la forme finale de l'article (MM) devant être produit ; et
- une étape de stratification (47), ultérieure à l'étape de dépôt (46), au cours de laquelle une unité de stratification automatique (13), au moyen d'au moins un outil de stratification (30), traite le profil préformé (6), en l'amenant sensiblement à adhérer à la partie de formage (12).

2. Procédé selon la revendication 1 et comprenant une première étape de balayage (42), avant l'étape de préformage (45), au cours de laquelle un capteur tridimensionnel (19) détecte la position dans l'espace d'un modèle physique (9) et la communique à l'unité de préformage automatique (8).

3. Procédé selon l'une quelconque des revendications précédentes et comprenant une seconde étape de balayage (42), avant à l'étape de dépôt (46), au cours de laquelle le capteur tridimensionnel (19) détecte la position dans l'espace de la partie de formage (12) du moule (11) et la communique à l'unité de préformage automatique (8).

4. Procédé selon l'une quelconque des revendications précédentes, dans lequel l'unité de stratification automatique (13) traite un ou plusieurs chemins de stratification à l'aide d'un modèle (9) tridimensionnel virtuel de la partie de formage (12) du moule (11) et/ou de la position dans l'espace de la partie de formage (12) du moule (11) détectée par le capteur tridimensionnel (19).

5. Procédé selon l'une quelconque des revendications précédentes, dans lequel, au cours de l'étape de stratification (47), le tissu fibreux (5) est imbibé dans une matrice, en particulier une matrice polymère ; et dans lequel, au cours de l'étape de stratification (47), le moule (11) et/ou l'outil de stratification (30) sont chauffés.

6. Procédé selon l'une quelconque des revendications précédentes, dans lequel l'étape de découpe (41), l'étape de préformage (45), l'étape de dépôt (46) et l'étape de stratification (47) sont répétées jusqu'à ce qu'une couche de base (31) de matériau composite (CM) soit obtenue, qui recouvre au moins partiellement la partie de formage (12).

7. Procédé selon la revendication 6 et comprenant une étape de contrôle (49), au cours de laquelle un système de contrôle (32) analyse la couche de base (31) pour déterminer des défauts géométriques et/ou des défauts de motif du tissu fibreux (5) et, si nécessaire, en particulier, pour les corriger.

8. Procédé selon l'une quelconque des revendications précédentes, dans lequel en particulier à la suite de l'étape de contrôle (49), l'étape de découpe (41), l'étape de préformage (45), l'étape de dépôt (46) et l'étape de stratification (47) sont répétées afin de fabriquer des couches supplémentaires de profils sur des zones respectives de la couche de base (31).

9. Procédé selon l'une quelconque des revendications précédentes et comprenant au moins une étape de compression (50), au cours de laquelle le moule (11) est fermé dans une poche à vide (24) et l'air à l'intérieur de la poche à vide (24) est sensiblement éliminé de façon à comprimer le matériau composite (CM) sur le moule (11).

10. Procédé selon la revendication 9, dans lequel, avant l'étape de compression (50), au moins une partie de la poche à vide (24) est façonnée sur la base de la partie de formage (12) de façon à épouser la forme de celle-ci.

11. Procédé selon l'une quelconque des revendications précédentes et comprenant une étape de cuisson (51), au cours de laquelle le moule (11) ayant, appliquées sur celui-ci, les couches de matériau composite (CM), en particulier comprenant le tissu fibreux (5) et la matrice, est soumis à des cycles de cuisson en autoclave (22).

12. Procédé selon l'une quelconque des revendications précédentes, et comprenant une étape de régulation (55) avant l'étape de préformage (45) au cours de laquelle une unité de préformage automatique (8) saisit ledit profil (6) et le déforme sur la base d'un modèle (9) tridimensionnel physique ou virtuel ; dans lequel l'unité de préformage automatique (8) comprend une griffe (17), qui à son tour comprend une pluralité de tiges (18) et un système de transmission (115) ; dans lequel l'étape de régulation (55) comprend la variation de la longueur de chaque tige (18) sur la base de la transformation de la feuille (4) de 2D en 3D devant être effectuée.

13. Appareil pour la production d'un article (MM) constitué d'un matériau composite (CM) comprenant :
- un poste de découpe (2), qui comprend un système de découpe (3), qui est configuré pour découper et obtenir un profil (6) à partir d'une feuille (4) de tissu fibreux (5) ;
- un poste de préformage (7), qui comprend une unité de préformage automatique (8), qui est configurée pour préformer, en utilisation, le profil (6) sur la base d'un modèle (9) tridimensionnel physique ou virtuel ;
- un poste de stratification (10) comprenant un moule (11), sur lequel l'unité de préformage automatique (8) dépose le profil préformé (6) sur une partie de formage (12) respective du moule (11), et une unité de stratification automatique (13), qui est configurée pour stratifier le profil (6) sur le moule (11) .

14. Appareil selon la revendication 13, dans lequel le système de découpe (3) et/ou l'unité de préformage automatique (8) et/ou l'unité de stratification automatique (13) comprennent un robot (14, 15, 16, 33), en particulier un robot anthropomorphe.

15. Appareil selon la revendication 13 ou 14, dans lequel l'unité de préformage automatique (8) comprend une griffe (17) dotée de tiges rétractables (18) ; dans lequel la griffe (17) comprend, à son tour, un système de transmission (115) qui régule la longueur de chaque tige (18).

16. Appareil selon la revendication 15, dans lequel la griffe (17) dotée de tiges rétractables (18) est un système à crémaillère ; dans lequel chaque tige (18) est formée par deux barres opposées (1121, 112II); dans lequel le système de transmission (115) comprend une roue dentée (114) qui s'engrène simultanément avec un premier pignon linéaire (1181) réalisé sur une première barre (1121) et un second pignon linéaire (118II) réalisé sur la seconde barre (11211).

17. Appareil selon une quelconque revendication de 13 à 16, dans lequel l'unité de préformage automatique (8) comprend une ou plusieurs tiges (18) ; chaque tige (18) ayant une extrémité de saisie (110I) munie d'une unité de retenue (111) configurée pour retenir, en utilisation, une partie respective (a) de la feuille (4) de matériau flexible ; chaque unité de retenue (111) comprenant :
- un capuchon sphérique (150) qui est relié de manière fluidique à un conduit d'aspiration (160) ;
- une pluralité de dispositifs de saisie (151) qui font saillie à l'extérieur du capuchon sphérique (150) au niveau d'une zone de saisie (β) respective.

18. Appareil selon la revendication 17, dans lequel les zones de saisie (β) sont uniformément réparties sur la surface externe du capuchon sphérique (150) ; dans lequel chaque dispositif de saisie (151) comprend :
- un palpeur (152) qui est monté de manière mobile d'une position externe à une position interne ;
- des éléments de rappel élastique (153), en particulier un ressort hélicoïdal, pour pousser le palpeur 152 vers la position externe.

19. Appareil selon une quelconque revendication de 13 à 18 et comprenant un capteur (100 ; 19), en particulier un système de vision, qui est configuré pour identifier la position exacte du profil (6) sur ladite griffe (17).

20. Appareil selon une quelconque revendication de 13 à 19 et comprenant au moins un capteur tridimensionnel (19), en particulier un système de vision, qui est configuré pour identifier la position dans l'espace d'un modèle (9) physique par rapport à l'unité de préformage automatique (8) ; en particulier, l'au moins un capteur tridimensionnel (19) est également configuré pour identifier la position dans l'espace du moule (11) par rapport à l'unité de stratification automatique (13).

21. Appareil selon l'une des revendications 13 à 20 et comprenant une unité de stockage (20), en particulier une unité de stockage automatisée, qui est configurée pour fournir au poste de découpe (2) la feuille (4) de tissu fibreux (5) ; et/ou un poste de cuisson (21) comprenant un autoclave (22) ; et/ou un poste de compression (23) comprenant une poche à vide (24) et une pompe à vide ; et/ou un magasin d'outils (25), qui est agencé près du poste de stratification (10) et est configuré pour fournir à l'unité de stratification automatique (13) un ou plusieurs outils (26) dotés de différentes formes, en particulier, le moule (11) et/ou les outils (26) peuvent être chauffés.
